(19) Europäisches Patentamt
European Patent Office
Office européen des brevets

(11) **EP 4 008 823 B1**

(12) **EUROPÄISCHE PATENTSCHRIFT**

(45) Veröffentlichungstag und Bekanntmachung des Hinweises auf die Patenterteilung:
**25.10.2023   Patentblatt 2023/43**

(21) Anmeldenummer: **21173000.7**

(22) Anmeldetag: **10.05.2021**

(51) Internationale Patentklassifikation (IPC):
**D04H 1/435** (2012.01)   **D04H 1/541** (2012.01)
**D04H 1/55** (2012.01)

(52) Gemeinsame Patentklassifikation (CPC):
**D04H 1/435; D04H 1/5412; D04H 1/5418; D04H 1/55**

(54) **GEPRÄGTER VLIESSTOFF FÜR DEN FAHRZEUGINNENRAUM**

EMBOSSED NONWOVEN FABRIC FOR VEHICLE INTERIOR

NON-TISSÉ GAUFRÉ POUR HABITACLE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2020   DE 202020107011 U**
**26.04.2021   DE 202021102212 U**

(43) Veröffentlichungstag der Anmeldung:
**08.06.2022   Patentblatt 2022/23**

(73) Patentinhaber: **Carl Freudenberg KG**
**69469 Weinheim (DE)**

(72) Erfinder:
• **Venugopal, Arun Prasad**
**69469 Weinheim (DE)**
• **Urbanc, Dasa**
**4208 Sencur (SI)**
• **Jurjevcic, Andreja**
**1360 Vrhnika (SI)**
• **Weik, Angela**
**68782 Brühl (DE)**

(56) Entgegenhaltungen:
EP-A1- 1 321 554          EP-A1- 3 769 954
DE-U1-202015 005 969      US-A1- 2018 272 953

**Beschreibung**

Die vorliegende Erfindung betrifft einen geprägten Vliesstoff für den Fahrzeuginnenraum, insbesondere für eine Kofferraumabdeckung, und eine Kofferraumabdeckung für ein Fahrzeug, die den Vliesstoff aufweist.

Derzeit werden für den Fahrzeuginnenraum, insbesondere für die Kofferraumabdeckung, üblicherweise mit Polyvinylchlorid (PVC) beschichtete Materialien verwendet. Vorteilhaft an der Verwendung von PVC ist, dass es eine hohe Oberflächenglätte aufweist, was eine besonders raumsparende Aufbewahrung und damit einhergehend eine geringe Dicke im Fahrzeug ermöglicht. Nachteilig ist jedoch, dass es ein vergleichsweise hohes Flächengewicht aufweist und dass es, insbesondere bei Sonneneinstrahlung, VOC freisetzt. Darüber hinaus ist es aufgrund seiner üblicherweise vorhandenen Verbundstruktur schlecht recycelbar.

Aus diesem Grund besteht ein Bedarf nach Vliesstoffen, die für den Fahrzeuginnenraum verwendet werden können. Vorteilhaft an der Verwendung von Vliesstoffen ist nämlich, dass mit ihnen ein geringes Flächengewicht mit geringen bzw. sogar keinen VOC- Emissionen kombiniert werden kann.

Ein Vliesstoff ist ein Gebilde aus Fasern begrenzter Länge, Endlosfasern (Filamenten) oder geschnittenen Garnen jeglicher Art und jeglichen Ursprungs, die auf irgendeine Weise zu einem Vlies (einer Faserschicht, einem Faserflor) zusammengefügt und auf irgendeine Weise miteinander verbunden worden sind; Vliesstoffe sind in der Norm ISO 9092/2019 definiert. Wie oben erläutert, weisen Vliesstoffe Vorteile für den Fahrzeuginnenraum auf. Nachteilig an der Verwendung von bekannten Vliesstoffen im Fahrzeuginnenraum ist jedoch, dass diese aufgrund ihrer Faserstruktur oftmals einen hohen Raumbedarf aufweisen. Darüber hinaus wird von einigen Kunden gewünscht, dass das Fahrzeuginnenraummaterial möglichst keinen textilen Charakter und eine geringe "Haarigkeit" aufweist, da hierdurch eine größere Ähnlichkeit zu bekannten Produkten und zusätzlich eine größere Beständigkeit gegenüber Abrieb erhalten werden kann.

Die EP 1321 554 A1 beschreibt ein Isolations-Material zur Absorption von Schallwellen und zur thermischen Isolierung, bestehend aus thermoplastischen Stapelfasern als Matrixfasern und thermoplastische Schmelzklebefasern enthaltendem mechanisch und thermisch verfestigtem Vliesstoff, wobei

- der Vliesstoff ein Verhältnis von $V_{Luft}$ zu $V_{Faser}$ von größer 40 : 1 aufweist,
- der Vliesstoff ein gewichtsbezogenes Biegesteifigkeitsverhältnis von kleiner 0,5 aufweist und
- der Vliesstoff eine Trennfestigkeit von mindestens 3N/5cm aufweist.

Aus der EP 3 769 954 A1 ist ein Vliesstofflaminat bekannt, umfassend in der Reihenfolge (A) bis (E):

- eine Spinnvliesschicht (A) mit Fasern, die Polyethylenterephthalat (PET) und Copolyester umfassen;
- eine optionale Spinnvliesschicht (B), die Fasern umfasst, die Polyethylenterephthalat (PET) und Copolyester umfassen, wobei die Vliesstoffschicht (B) einen höheren Copolyestergehalt aufweist als die Vliesschicht (A);

- eine genadelte Stapelfaser-Vliesstoffschicht (C), umfassend:

   ◦ Monokomponenten-Polyethylenterephthalat (PET)-Stapelfasern (c1), und
   ◦ Mehrkomponenten-Stapelfasern (c2), die mindestens eine Polyethylenterephthalat (PET)-Komponente und eine Copolyester-Komponente umfassen;

- eine optionale Spinnvliesschicht (D), die Fasern umfasst, die Polyethylenterephthalat (PET) und Copolyester umfassen, wobei die Vliesschicht (D) einen höheren Copolyestergehalt als die Vliesschicht (E) aufweist;
- eine Spinnvliesschicht (E), die Fasern umfasst, die Polyethylenterephthalat (PET) und Copolyester umfassen;wobei alle Schichten miteinander schmelzverbunden sind.

Die DE 202015005969 U1 beschreibt einen Vliesstoff, insbesondere Spinnvliesstoff, umfassend eine erste Faserkomponente, die antimonfreien Polyester enthält und eine zweite Faserkomponente, die ein thermoplastisches Polymer mit einem Schmelzpunkt, der mindestens 20°C unterhalb des Schmelzpunkts der ersten Faserkomponente liegt, aufweist.

Aus der DE102018105164 (A1) ist ein Vliesstoff für ein Fahrzeuginnenraummaterial, bekannt, der durch Thermokompressionsformen eines Filzes hergestellt ist, wobei der Filz durch Mischen von Polyethylenterephthalat-(PET)-Stapelfasern und niedrigschmelzenden-PET-(niedrigschmelzenden Polyethylenterephthalat)-Stapelfasern mit einem Schmelzpunkt in einem Bereich von 120 bis 140°C und 150 bis 170°C ausgebildet ist.

Die Aufgabe der Erfindung besteht darin, ausgehend von der DE102018105164 (A1) einen Vliesstoff bereitzustellen, der für den Fahrzeuginnenraum und insbesondere zur Verwendung als Kofferraumabdeckung geeignet ist. Der Vliesstoff soll ferner auch bei geringem Stauraum einsetzbar sein und mit einem nur geringen oder einem nicht-textilen Charakter gefertigt werden können. Falls erwünscht, soll der Vliesstoff jedoch auch mit einem textilen Charakter gefertigt werden können. Darüber hinaus soll der Vliesstoff eine gleichmäßige Faserverteilung mit einer guten Faserverbindung kombinieren, und hierdurch gute mechanische Eigenschaften sowie zusätzlich gute akustischen Eigenschaften aufweisen.

Diese Aufgabe wird gelöst durch einen geprägten Vliesstoff für den Fahrzeuginnenraum, insbesondere für eine Kofferraumabdeckung, umfassend Polyethylenterephthalat-Gerüststapelfasern und Polyethylenterephthalat-Bindestapelfasern, wobei der Anteil an Polyethylenterephthalat-Bindestapelfasern 5 bis 50 Gew.%, bezogen auf das Gesamtgewicht des Vliesstoffs beträgt, und wobei die Polyethylenterephthalat-Bindestapelfasern als Kern/Mantel-Stapelfasern ausgebildet sind, wobei der Mantel der Kern/Mantel-Stapelfasern niedrigschmelzendes Co-Polyethylenterephthalat mit einem Schmelzpunkt gemessen nach DIN ISO 11357-3 (2013) in einem Bereich von 80°C bis 230°C aufweist. Die Kofferraumabdeckung ist dabei vorzugsweise eine Kofferraumabdeckung für ein Fahrzeug.

In praktischen Versuchen wurde gefunden, dass es die Verwendung von Kern/Mantel-Stapelfasern, in denen der Mantel niedrigschmelzendes Co-Polyethylenterephthalat, mit einem Schmelzpunkt in einem Bereich von 80°C bis 230°C aufweist, in dem erfindungsgemäßen Vliesstoff ermöglicht, eine gute Faserverbindung und hierdurch gute mechanische und akustische Eigenschaften mit einer guten und gleichmäßigen Prägbarkeit zu kombinieren. Dabei wurde auch festgestellt, dass ein sehr geringer Variationskoeffizient der Festigkeitswerte und Dicke erzielt werden kann. Darüber hinaus ermöglichen es die Kern/Mantel-Bindestapelfasern den Vliesstoff mit einer guten Dehnung auch bei geringen Dicken auszustatten.

Erfindungsgemäß bevorzugt liegen die Polyethylenterephthalat-Bindestapelfasern zumindest teilweise thermisch verschmolzen vor. Hierdurch kann eine bessere Faserbindung und/oder eine höhere Oberflächenglätte erhalten werden.

Ohne sich auf einen Mechanismus festzulegen, wird vermutet, dass die gute Faserverbindung dadurch erzielt wird, dass die Kern/Mantel-Stapelfasern eine sehr homogene Verteilung ermöglichen. Dabei kann insbesondere eine "Verklumpung" der Bindekomponente, wie sie bei der Verwendung von Monokomponenten-Bindefasern, speziell bei höheren Mengen, oftmals auftritt, vermieden werden. Dies führt vermutlich auch zu dem beobachteten geringen Variationskoeffizienten der Festigkeitswerte sowie zu der guten und gleichmäßigen Prägbarkeit.

Weiter wird vermutet, dass die guten mechanischen Eigenschaften dadurch erzielt werden, dass der Kern der Kern/Mantel-Stapelfasern beim Bindevorgang erhalten bleibt und somit zur Festigkeit und Dehnung des Vliesstoffs beitragen kann.

Erfindungsgemäß bevorzugt ist der Vliesstoff ein Vliesstoff gemäß Norm ISO 9092/2019. In einer bevorzugten Ausführungsform der Erfindung weist der Vliesstoff einen Schallabsorptionskoeffizienten, gemessen nach DIN ISO 10534-1 (2001) bei einem Wandabstand von 30 mm und bei einer Frequenz von 800 Hz bis 4000 Hz, bevorzugt von 800 bis 2000 Hz, insbesondere bei 2500 Hz von mehr als 45 %, beispielsweise von 45 % bis 100 %, noch bevorzugter von mehr als 60 %, beispielsweise von 60 % bis 100 %, noch bevorzugter von mehr als 70 %, beispielsweise von 70 % bis 100 %, und insbesondere von mehr als 80 %, beispielsweise von 80 % bis 100 % auf.

Der gemessene Schallabsorptionsgrad von über 45% ist deutlich höher als der Schallabsorptionsgrad eines Vergleichsmaterials auf PVC-Basis, der bei Frequenzen von über 1000 Hz (Wandabstand 30 mm) unter 20 % liegt. Frequenzen von 800 bis 4000 Hz sind für das Automobilinterieur besonders relevant.

Darüber hinaus weist der Vliesstoff in einer weiteren bevorzugten Ausführungsform einen Schallabsorptionskoeffizienten (gemessen nach DIN ISO 10534-1 (2001) bei einem Wandabstand von 30 mm) von über 45% bei mindestens 6, vorzugsweise bei mindestens 7 noch bevorzugter bei mindestens 8 und insbesondere bei mindestens 9 von insgesamt 19 Terzintervallen bei der Impedanzmessung auf.

Im Unterschied dazu weist ein im Vergleichsbeispiel geprüftes Vergleichsmaterial auf PVC-Basis einen Schallabsorptionskoeffizienten (gemessen nach DIN ISO 10534-1 (2001) bei einem Wandabstand von 30 mm) von über 45% lediglich bei 4 von insgesamt 19 Terzintervallen bei der Impedanzmessung auf.

Zudem wurde gefunden, dass der Vliesstoff mit einem nur geringen textilen Charakter oder einem nicht-textilen Charakter gefertigt werden kann. Dies kann vorteilhaft sein, da hierdurch eine hohe Ähnlichkeit zu bekannten Produkten, zusätzlich eine größere Beständigkeit gegenüber Abrieb und außerdem ein niedriges Anschmutzverhalten erhalten werden kann. Dazu kommt, dass die Verwendung von Polyethylenterephthalat-Bindestapelfasern in Form von Kern/Mantelfasern zu einer sehr hohen Prägbarkeit des Vliesstoffs führt.

Gleichzeitig können sowohl die Fasern als auch gegebenenfalls vorhandene einzelne Lagen gut miteinander verbunden werden.

Aufgrund der hohen Stabilität des Vliesstoffs kann er darüber hinaus in geringer Dicke gefertigt werden, wodurch er auch bei Einbausituationen mit begrenztem Bauraum verbaut werden kann. In einer bevorzugten Ausführungsform weist der Vliesstoff eine Dicke, gemessen nach DIN 9073-2 (1997), Prüfeinrichtung 1, von 0,3 bis 1,2 mm, bevorzugt von 0,4 bis 1 mm, noch bevorzugter von 0,4 bis 0,8 mm, noch bevorzugter von 0,4 bis 0,7 mm und insbesondere von 0,45 bis 0,6 mm auf. Ebenfalls besonders bevorzugt weist der Vliesstoff eine Dicke von 0,45 bis 0,7 mm auf. Trotz der geringen Dicke kann der Vliesstoff mit einer hohen Dehnung gefertigt werden. Dies war überraschend, da insbesondere bei geprägten Vliesstoffen eine geringe Dicke in der Regel mit einer geringen Dehnung einhergeht was zu einem papierartigen Charakter führt.

In einer weiteren bevorzugten Ausführungsform weist der Vliesstoff einen Variationskoeffizienten der Dicke von unter 15%, noch bevorzugter unter 12% und insbesondere unter 10% auf.

Erfindungsgemäß weist der Mantel der Kern/Mantel-Stapelfasern niedrigschmelzendes Co-Polyethylenterephthalat auf. Das Co-Polyethylenterephthalat kann üblicherweise für Kern/Mantel-fasern verwendetes Co-Polyethylenterephthalat sein.

Bevorzugt liegt der Anteil des niedrigschmelzenden Co-Polyethylenterephthalats, bezogen auf das Gesamtgewicht des Mantels bei über 95 Gew.%, insbesondere bei über 98 Gew.%.

In einer bevorzugten Ausführungsform liegt das Mengenverhältnis zwischen Kern und Mantel in den Kern/Mantel-Stapelfasern im Bereich von 90:10 bis 10:90, bevorzugt von 80:20 bis 20:80, noch bevorzugter von 70:30 bis 30:70, und insbesondere von 60:40 bis 40:60.

Die Kern/Mantel-Stapelfasern können die verschiedensten Formen aufweisen, beispielsweise rund, trilobal und/oder mulitlobal sein.

In einer weiteren bevorzugten Ausführungsform weisen die Polyethylenterephthalat-Gerüststapelfasern und die Polyethylenterephthalat-Bindestapelfasern unabhängig voneinander einen Titer im Bereich von 1 bis 10 dtex, noch bevorzugter von 2 bis 8 dtex und insbesondere von 2 bis 7 dtex auf.

In einer weiteren bevorzugten Ausführungsform weisen die Polyethylenterephthalat-Gerüststapelfasern und die Polyethylenterephthalat-Bindestapelfasern unabhängig voneinander eine Stapellänge im Bereich von 1 bis 100 mm, bevorzugt von 10 bis 70 mm, noch bevorzugter von 20 bis 60 mm und insbesondere von 30 bis 50 mm auf.

Bevorzugte Vliesstoffe sind vernadelte und/oder durch Wasserstrahlen verfestigte Vliesstoffe. Besonders bevorzugt sind beidseitig vernadelte und/oder beidseitig durch Wasserstrahlen verfestigte Vliesstoffe, da hierdurch die Fasern auf beiden Seiten besonders gut in den Vliesstoff eingebunden werden können. In einer bevorzugten Ausführungsform der Erfindung beträgt die Nadeldichte im Vliesstoff von 25 Nadeln/cm$^2$ bis 700 Nadeln/cm$^2$, noch bevorzugter von 100 Nadeln/cm$^2$ bis 600 Nadeln/cm$^2$ und insbesondere von 200 Nadeln/cm$^2$ bis von 500 Nadeln/cm$^2$. Es wurde gefunden, dass eine Verringerung der Nadeldichte zu einer größeren Faserflexibilität und damit einhergehend einer besseren Komprimierbarkeit des Vliesstoffs führt, was wiederum mit einem geringeren Raumbedarf einhergeht. Es wurde auch gefunden, dass eine Einstellung der Nadeldichte auf unter 25 Nadeln/cm$^2$ zu einer ungenügenden Verbindung der Fasern im Vliesstoff führen kann.

In einer bevorzugten Ausführungsform der Erfindung weist der Vliesstoff, ein- oder beidseitig, ein Prägemuster auf. Bevorzugte Prägemuster sind Lederimitate, Rauten, Prismen und/oder Textilimitate. Weiter bevorzugt weist der Vliesstoff ein mittels Ultraschall oder Heißprägung aufgebrachtes Prägemuster auf. Dieses kann beispielsweise durch einen Prägekalander aufgebracht werden. Der Prägekalander kann beispielsweise Metall/Siliconwalzen oder auch Metall/Metallwalzen aufweisen. Vorteilhaft hierbei ist der hohe Gestaltungsspielraum der Prägemuster. So kann beispielsweise sowohl eine geometrische als auch eine lederähnliche Oberfläche mit entsprechender Haptik und/oder Optik hergestellt werden.

Der Prägekalander kann auch zur Einstellung der gewünschten Dicke des Vliesstoffs verwendet werden. Bevorzugte Kalandertemperaturen liegen im Bereich von 80°C bis 350°C, noch bevorzugter von 125°C bis 250° und insbesondere von 150°C bis 225°. Ganz besonders bevorzugte Kalandertemperaturen liegen im Bereich von 150°C bis 350°C, noch bevorzugter 180°C bis 350°C, insbesondere 180°C bis 300°C. Hieran ist vorteilhaft, dass Vliesstoffe mit einer besonders geringen Haarigkeit, einem PVC-ähnlichen Charakter und einer geringen Anschmutzbarkeit erhalten werden können. Bevorzugte Kalanderdrücke liegen im Bereich von 10 bar bis 150 bar, noch bevorzugter von 25 bar bis 100 bar und insbesondere von 40 bar bis 75 bar. Bevorzugte Kalandergeschwindigkeiten liegen im Bereich von 0,1 m/min. bis 50 m/min., vorzugsweise von 0,5 m/min. bis 25 m/min und insbesondere von 1 m/min. bis 20 m/min. Es wurde gefunden, dass mit den genannten Kalanderbedingungen, insbesondere in Kombination mit den oben beschriebenen Nadeldichten, Vliesstoffe mit einer geringen Dicke in Kombination mit guten mechanischen Eigenschaften, insbesondere einer guten Zugfestigkeit und Reißfestigkeit erhalten werden können. In einer Ausführungsform ist der erfindungsgemäße Vliesstoff mithin ein kalandrierter Vliesstoff. Ein erfindungsgemäß besonders bevorzugter Vliesstoff ist ein Vliesstoff, der bei Temperaturen im Bereich von 150°C bis 350°C, noch bevorzugter 180°C bis 350°C, insbesondere 180°C bis 300°C kalandriert wurde. Ein ebenfalls erfindungsgemäß besonders bevorzugter Vliesstoff ist ein Vliesstoff, der bei Kalanderdrücken im Bereich von 10 bar bis 150 bar, noch bevorzugter von 25 bar bis 100 bar und insbesondere von 40 bar bis 75 bar kalandriert wurde. Ein ebenfalls erfindungsgemäß besonders bevorzugter Vliesstoff ist ein Vliesstoff, der bei Kalandergeschwindigkeiten im Bereich von 0,1 m/min. bis 50 m/min., vorzugsweise von 0,5 m/min. bis 25 m/min. und insbesondere von 1 m/min. bis 20 m/min. kalandriert wurde. Ganz besonders bevorzugt ist ein Vliesstoff, der bei den vorgenannten Parametern in Kombination kalandriert wurde.

Ein weiterhin erfindungsgemäß besonders bevorzugter Vliesstoff ist ein Vliesstoff, der zumindest auf einer Seite einen Haarigkeitsindex von unter 1,50, beispielsweise von 0,05 bis 1,50, noch bevorzugter von 0,05 bis 1,40 und insbesondere von 0,10 bis 1,30 aufweist. Vorzugsweise weist der Vliesstoff den vorgenannten Haarigkeitsindex zumindest auf einer geprägten Seite auf. Ebenfalls bevorzugt weist der Vliesstoff den vorgenannten Haarigkeitsindex auf zwei geprägten Seiten auf. Ebenfalls bevorzugt weist der Vliesstoff den vorgenannten Haarigkeitsindex zumindest auf einer geprägten und einer ungeprägten Seite auf.

Bevorzugt weist der Vliesstoff eine Zugfestigkeit längs, gemessen nach EN 29073-03 (1992) (Abzugsgeschwindigkeit : 200 mm/min., Vorkraft : 0,5N, Probenbreite 50 mm) von mehr als 50 N, beispielsweise 50 N bis 700 N, noch bevorzugter mehr als 200 N, beispielsweise 200 N bis 500 N und insbesondere von mehr als 300 N, beispielsweise 300 N bis 450 N auf. Ebenfalls besonders bevorzugt weist der Vliesstoff eine Zugfestigkeit längs von 250 N bis 450 N auf.

Weiter bevorzugt weist der Vliesstoff eine Zugfestigkeit quer, gemessen nach EN 29073-03 (1992) (Abzugsgeschwindigkeit : 200 mm/min., Vorkraft : 0,5N, Probenbreite 50 mm) von mehr als 50 N, beispielsweise 50 N bis 600 N, noch bevorzugter mehr als 200 N, beispielsweise 200 N bis 500 N und insbesondere von mehr als 250 N, beispielsweise 250 N bis 400 N auf. Ebenfalls besonders bevorzugt weist der Vliesstoff eine Zugfestigkeit quer von 250 N bis 500 N auf.

Weiter bevorzugt weist der Vliesstoff eine Dehnung längs und/oder quer unabhängig voneinander, gemessen nach EN 29073-03 (1992) (Abzugsgeschwindigkeit : 200 mm/min., Vorkraft : 0,5N, Probenbreite 50 mm) von 5 bis 50%, noch bevorzugter 10 bis 40% und insbesondere von 10 bis 30% auf. Ebenfalls besonders bevorzugt weist der Vliesstoff eine Dehnung quer von 10 bis 50% auf.

Weiter bevorzugt weist der Vliesstoff eine Weiterreißkraft längs und/oder quer unabhängig voneinander, (Abzugsgeschwindigkeit: 200 mm/min, Probenbreite: 50mm) von mehr als 5 N, beispielsweise 5 N bis 100 N, noch bevorzugter mehr als 10 N, beispielsweise 10 N bis 75 N und insbesondere von mehr als 20 N, beispielsweise 20 N bis 60 N auf.

Weiter bevorzugt weist der Vliesstoff ein Flächengewicht ISO 9073-1 (1989) von 50 g/m$^2$ bis 1000 g/m$^2$, noch bevorzugter von 100 g/m$^2$ bis 500 g/m$^2$ und insbesondere von 150 g/m2 bis 350 g/m2 auf. Ebenfalls bevorzugt weist der Vliesstoff ein Flächengewicht (DIN EN 29073-1:1992-08) von 50 g/m$^2$ bis 1000 g/m$^2$, noch bevorzugter von 100 g/m$^2$ bis 500 g/m$^2$ und insbesondere von 150 g/m$^2$ bis 350 g/m$^2$ auf.

Weiter bevorzugt ist der Vliesstoff ein quergelegter Vliesstoff. Hieran ist vorteilhaft, dass besonders gleichmäßige mechanische Eigenschaften in beide Richtungen (quer und längs) erhältlich sind. Wie oben erwähnt, können durch die Verwendung der Kern-Mantelfasern die beim Querlegen entstehenden verschiedenen Lagen besonders gut miteinander verbunden werden.

In einer weiteren Ausführungsform ist der Vliesstoff ein Airlaid-Vliesstoff. Hieran ist vorteilhaft, dass er besonders kostengünstig herstellbar ist.

In einer weiteren bevorzugten Ausführungsform der Erfindung weist der Mantel der Polyethylenterephthalat-Bindestapelfasern einen Schmelzpunkt gemessen nach DIN ISO 11357-3 (2013) in einem Bereich von 100 bis 200°C, noch bevorzugter von 120 bis 190°C, und insbesondere von 150 bis 180°C auf.

In einer weiteren bevorzugten Ausführungsform der Erfindung weist der Vliesstoff einen Anteil an Polyethylenterephthalat-Bindestapelfasern von 10 bis 40 Gew.% und insbesondere 15 bis 30 Gew.%, bezogen auf das Gesamtgewicht des Vliesstoffs auf.

In einer weiteren bevorzugten Ausführungsform der Erfindung weist der Vliesstoff einen Anteil an Polyethylenterephthalat-Gerüststapelfasern von 50 bis 95 Gew.% und insbesondere von 70 bis 85 Gew.%, bezogen auf das Gesamtgewicht des Vliesstoffs auf.

In einer weiteren bevorzugten Ausführungsform liegt der Vliesstoff unbeschichtet vor. Dies ist vorteilhaft, da eine bessere Recyclingfähigkeit vorliegt und außerdem die Gefahr des Ausdampfens von VOC verringert wird. Zusätzlich können die Herstellungskosten verringert werden.

Vorteilhafterweise weist der Vliesstoff einen geringen VOC-Wert auf. Vorzugsweise weist der Vliesstoff einen VOC-Wert, bestimmt gemäß VDA 278 (2012) von weniger als 100 µg/g, noch bevorzugter von weniger als 50 µg/g, noch bevorzugter von weniger als 20 µg/g, noch bevorzugter von weniger als 10 µg/g und insbesondere von weniger als 5 µg/g auf.

In einer weiteren bevorzugten Ausführungsform ist der Vliesstoff ein beschichteter Vliesstoff und weist einen VOC-Wert, bestimmt gemäß VDA 278 (2012) von weniger als 100 µg/g, noch bevorzugter von weniger als 50 µg/g, noch bevorzugter von weniger als 20 µg/g, und insbesondere von weniger als 10 µg/g auf.

Weiter vorteilhafterweise ist der Vliesstoff ein unbeschichteter Vliesstoff und weist einen VOC-Wert, bestimmt gemäß VDA 278 (2012) von weniger als 100 µg/g, noch bevorzugter von weniger als 50 µg/g, noch bevorzugter von weniger als 20 µg/g, noch bevorzugter von weniger als 10 µg/g, noch bevorzugter von weniger als 5 µg/g, noch bevorzugter von weniger als 2 µg/g und insbesondere von weniger als 1 µg/g auf.

Vorteilhafterweise weist der Vliesstoff einen geringen Fog-Wert auf. Vorzugsweise weist der Vliesstoff einen Fog-Wert, bestimmt gemäß VDA 278 (2012) von weniger als 400 µg/g, noch bevorzugter von weniger als 350 µg/g, noch bevorzugter von weniger als 300 µg/g, noch bevorzugter von weniger als 275 µg/g und insbesondere von weniger als 250 µg/g auf.

Weiter vorteilhafterweise ist der Vliesstoff ein beschichteter Vliesstoff und weist einen Fog-Wert, bestimmt gemäß VDA 278 (2012) von weniger als 400 $\mu$g/g, noch bevorzugter weniger als 300 $\mu$g/g, noch bevorzugter weniger als 275 $\mu$g/g, und insbesondere weniger als 250 auf.

In einer weiteren bevorzugten Ausführungsform ist der Vliesstoff ein unbeschichteter Vliesstoff und weist einen Fog-Wert, bestimmt gemäß VDA 278 von weniger als 100 $\mu$g/g, noch bevorzugter von weniger als 50 $\mu$g/g, noch bevorzugter von weniger als 20 $\mu$g/g, noch bevorzugter von weniger als 10 $\mu$g/g, noch bevorzugter von weniger als 5 $\mu$g/g auf.

Der Vliesstoff kann eine Beschichtung aufweisen. In dieser Ausführungsform weist die Beschichtung vorzugsweise einen Binder, vorzugsweise Acrylat, Farbpigmente, Verdicker und/oder Flammschutzmittel auf. Auf der Beschichtung kann ferner ein Finishing aufgebracht sein, beispielsweise ein Schmutz- und/oder wasserabweisendes Finishing.

In einer bevorzugten Ausführungsform der Erfindung weist der Vliesstoff eine Brennbarkeit gemäß DIN 75200 (1980) von weniger als 100 mm/min, noch bevorzugter von weniger als 80 mm/min und insbesondere von weniger als 50 mm/min auf. Ganz besonders bevorzugt ist der Vliesstoff nicht brennbar.

In einer weiteren bevorzugten Ausführungsform der Erfindung weist der Vliesstoff ein Fogging gemäß DIN 75 201 (2011) (reflektrometrisch) von mehr als 50 %, noch bevorzugter von mehr als 60 %, noch bevorzugter von mehr als 70 % und noch bevorzugter von mehr als 85 % und insbesondere mehr als 90 % auf.

In einer weiteren bevorzugten Ausführungsform der Erfindung weist der Vliesstoff ein Fogging gemäß DIN 75 201 (2011) (gravimetrisch) von weniger als 2 mg, noch bevorzugter von weniger als 1 mg, noch bevorzugter von weniger als 0,75 mg und insbesondere von weniger als 0,5 mg auf.

Der geprägte Vliesstoff eignet sich hervorragend zur Verwendung als Kofferraumabdeckung für den Fahrzeuginnenraum. Zu diesem Zweck wird der Vliesstoff vorzugsweise konfektioniert. Übliche Konfektionierungsschritte umfassen: Zuschneiden, beispielsweise mittels Stanzen, Ultraschall-, Laser-, Wasserstrahl- und Gelatine-Schneiden; Schweißen, beispielsweise mittels Ultraschall- oder Heißschweißen; Nähen, beispielsweise mittels Doppelsteppstich, Doppelkettenstich und/oder Verbinden mit weiteren Bauteilen beispielsweise Verstärkungskomponenten, Blenden und/oder Griffen.

Eine weitere Ausführungsform der Erfindung umfasst die Verwendung des erfindungsgemäßen geprägten Vliesstoffs zur Herstellung einer Kofferraumabdeckung für ein Fahrzeug.

Eine weitere Ausführungsform der Erfindung umfasst eine Kofferraumabdeckung für ein Fahrzeug, die den erfindungsgemäßen Vliesstoff aufweist.

**Prüfmethoden:**

**1. Zugfestigkeit**

Die Zugfestigkeit wird wie folgt bestimmt

Es wird eine Zugprüfmaschine nach DIN 51220 (2003) und DIN EN ISO 7500 (2018) und ein Stanzeisen 260x50 mm verwendet.

Probenvorbereitung:

Aus der vorhandenen Prüfprobe werden die Messproben gleichmäßig über die Warenbreite verteilt in Längs- und Querrichtung jeweils 10 cm vom Rand entfernt ausgestanzt.

Durchführung:

Die Messprobe wird gleichmäßig, mittig und lotrecht eingespannt, danach die Prüfung gemäß der maschinenspezifischen Arbeitsanweisung durchgeführt und mit der vorgegebenen Abzugsgeschwindigkeit = 200 mm/min und mit einer Vorkraft von 0,5N auseinandergezogen.

**2. Weiterreißkraft**

Die Weiterreißkraft wird wie folgt bestimmt:

Es wird eine Zugprüfmaschine nach DIN 51220 (2003) und DIN EN ISO 7500 (2018) und ein Stanzeisen 75x50 mm verwendet.

Probenvorbereitung:

Aus der vorhandenen Prüfprobe werden die Messproben gleichmäßig über die Warenbreite verteilt in Längs- und Querrichtung jeweils 10 cm vom Rand entfernt ausgestanzt.

Durchführung:

Die durch den Einschnitt entstandenen beiden Schenkel der Messprobe werden um 180° versetzt in die Klemmen der Zugprüfmaschine eingespannt (Klemmenabstand 50 mm) und mit der vorgegebenen Abzugsgeschwindigkeit = 200 mm/min auseinandergezogen. Da Vliesstoffe oft nicht in der Schnittrichtung weiterreißen, sind auch die Messproben zu berücksichtigen, die seitlich ausreißen.

### 3. Bestimmung des VOC-Werts

Die Emissionen werden gemäß VDA 278 (2012) bestimmt.

### 4. Bestimmung des Fog-Werts

Die Emissionen werden gemäß VDA 278 (2012) bestimmt.

### 5. Bestimmung des Foggingverhaltens

Das Fogging wird gemäß DIN 75201 (2011) gemessen.

### 6. Bestimmung des Schmelzpunkts

Der Schmelzpunkt wird gemäß DIN ISO 11357-3 (2013) bestimmt. Die Aufheizrate beträgt 10 K/min.

### 7. Bestimmung des Haarigkeitsindex in

Der Haarigkeitsindex in dient dazu die Oberfläche eines Textils zu beschreiben. Hierbei wird die Anzahl als auch die Länge der abstehenden Faserenden vom Textilrumpf gemessen und anhand dessen ein Wert erteilt, der die Glätte des Textils beziehungsweise dessen Haarigkeit bewertet, also ob es eher wenig oder viele abstehende Faserenden aufweist.

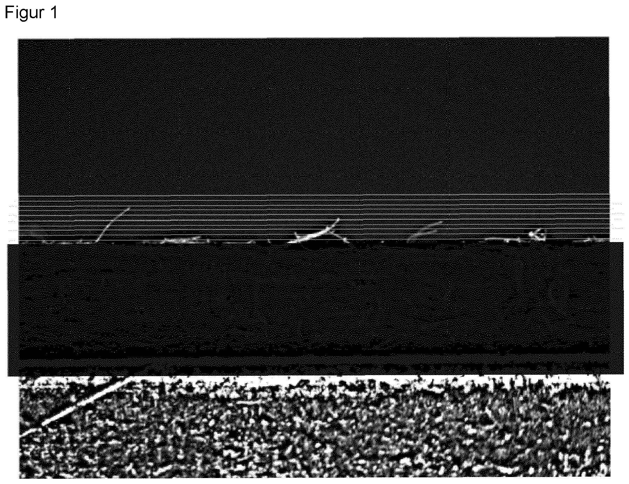

Die Messung des Haarigkeitsindex erfolgt mit Hilfe eines Mikroskops mit Kamera, das eine Profilansicht des Textils erstellt. Eine beispielhafte Profilansicht ist in Figur 1 dargestellt. Es werden an einer Messprobe, mit den Maßen 100 mm $\times$ 14 mm, drei verschiedene Messungen an drei unterschiedlichen Zonen, links, mittig und rechts der Messprobe, durchgeführt. Die Breite des Textilausschnittes beträgt 10 mm. Für die Aufnahmen wird das Mikroskop auf 2,25 fache Vergrößerung gestellt, bei einer Belichtungszeit von 120 s.

Zur Quantifizierung der Haarigkeit des Textilquerschnittes werden horizontale Linien mit einem Raster auf das Bild appliziert, die in einem Abstand von 0,082 mm angeordnet sind. Die erste Linie des Rasters beginnt in einem Abstand von 0,082 mm von der Oberflächenlinie des Textilrumpfs. Als Textilrumpf wird die Fläche definiert, innerhalb derer ein zusammenhängendes Textilgebilde zu erkennen ist. Zweckmäßigerweise wird als Textilrumpf die Fläche unterhalb der ersten Linie von oben definiert, bei der in einer optischen Auswertung mehr durch Fasern belegte Fläche als faserfreie Fläche zu erkennen ist.

Daraufhin werden die entstehenden Schnittstellen zwischen den abstehenden Fasern und den horizontalen Linien ausgezählt. Nun gilt es eine Regressionsgerade zu erstellen, um anhand der Fläche unterhalb der Geraden eine Aussage über die Haarigkeit des Textils zu bekommen. Je größer der Flächeninhalt, also das bestimmte Integral ist, desto haariger ist das Textil, da ein höherer Zahlenwert des bestimmten Integrals von einer höheren Anzahl und Länge an Faserenden abhängt. Aus der Anzahl der erhaltenen Schnittstellen auf einer Linie wird die Anzahl der Fasern, denen (mindestens) die Länge dieser Linie (also 0,082 mm und die Vielfachen davon) als Faserlänge zugeordnet wird, ermittelt.

Um nun die Regressionsgerade zu erhalten, wird die Länge der Fasern in mm (y-Achse) und die Anzahl der Fasern in Stück (x-Achse) in einem Punktdiagramm aufgezeigt. Die Anzahl der Fasern in Stück wird natürlich logarithmiert, so dass eine Regressionsgerade angelegt werden kann.

$$F_{\ln(n)} = \ln F_n$$

$F_{\ln(n)}$ Anzahl Fasern n, in ln
$F_n$ Anzahl Fasern n, in Stück

Anschließend wird eine lineare Regression durchgeführt, wobei die Parameter a und b der Geradengleichung $y = ax + b$ sich durch die Daten $x_i = \ln n_i$ und $y_i = L_i$ errechnen lassen.

$$a = \frac{\sum_i x_i y_i - \frac{1}{n} \sum_i x_i \sum_i y_i}{\sum_i x_i^2 - \frac{1}{n} (\sum_i x_i)^2}$$

$$b = \frac{\sum_i y_i}{n} - a \frac{\sum_i x_i}{n}$$

Nachdem die Regressionsgerade berechnet und in das Diagramm eingezeichnet wurde, wird nun das bestimmte Integral berechnet. Die untere Grenze des bestimmten Integrals ergibt sich aus dem Minimum der Faseranzahl, was bei einer Messung die Anzahl 1 ist. Wird diese Minimalanzahl logarithmiert ergibt sich ein Zahlenwert von 0, welcher wiederum die untere Grenze des Integrals definiert. Die obere Grenze des Integrals wird anhand der Nullstelle $x_0$ der Regressionsgeraden ermittelt, d.h. an welcher Stelle der X-Achse die Gerade den Y-Wert 0 erhält. Dies wird mittels folgender Formel berechnet:

$$x_0 = \frac{b}{a}$$

Da nun auch die Grenzen des Integrals bestimmt wurden, kann nun der Flächeninhalt unterhalb der Regressionskurve anhand der Formel ermittelt werden.

$$\int_{\ln 1}^{x_0} ax + b \, dx$$

Die Integralwerte der 3 Messzonen werden gemittelt und ergeben den Haarigkeitsindex in. Es wird zusätzlich die Standardabweichung bestimmt.
Im Folgenden wird die Erfindung anhand eines Beispiels näher erläutert

**Beispiel 1: Herstellung eines erfindungsgemäßen Vliesstoffs**

Verwendete Materialien zur Herstellung des Vliesstoffs 1

- Polyethylenterephthalat-Gerüststapelfasern:

    80 Gew.% Monokomponenten- PET Stapelfasern
    Stapellänge: 38 mm
    Feinheit: 3,3 dTex

- Polyethylenterephthalat-Bindestapelfasern:

    20 Gew.% Bikomponenten- PET/ Polyethylenterephthalat-
    Bindestapelfasern (CoPET Stapelfasern)
    niedrigschmelzendes CoPET mit einem Schmelzpunkt von 180 °C
    Stapellänge: 51 mm
    Feinheit: 4,4 dTex.

Die Polyethylenterephthalat-Gerüststapelfasern und die Polyethylenterephthalat-Bindestapelfasern werden im Verhältnis 80%:20% gemischt und anschließend gekrempelt, kreuzgelegt,vernadelt und mit einem Prägekalander mit einem lederähnlichen Muster versehen und gleichzeitig auf eine auf eine Dicke vom 0,6mmkalibriert.

**Beispiel 2: Evaluierung verschiedener Eigenschaften des Vliesstoffs und Vergleich mit einem PVC-beschichteten Gewebe**

In der nachfolgenden Tabelle werden verschiedene relevante Eigenschaften des in Beispiel 1 hergestellten Vliesstoffs (Vliesstoff 1) dargestellt und mit denen eines PVC-beschichteten Gewebes verglichen.

Tab.1

| Eigenschaften | Einheit | Vliesstoff 1 (erfindungsgemäß) | PVC (nicht erfindungsgemäß) |
|---|---|---|---|
| Gewicht (DIN EN 29073-1:1992-08 für Vliesstoff 1 und EN ISO 2286-2 für PVC) | g/m$^2$ | 200 | 650 |
| Dicke (DIN 9073-2 / 1997 für Vliesstoff 1 und DIN ISO 2286-3 für PVC) | mm | 0,6 | 0,6 |
| Dehnung (EN 29073-03 (1992) | % | 20 | - |
| textiler Charakter | | Einstellbar | Nein |
| Schallabsorptionsgrad gemessen bei 2500Hz (DIN ISO 10534-1 (2001)) | % | 99 | 14 |
| VOC-Wert (VDA 278 (2012)) (Gesamt)* | μg/g | <0,1 | 114* |
| Fog-Wert VDA 278 (2012)** | μg/g | 4,9 | 482** |
| Fogging (DIN 75201 (2011)) Reflektrometrisch | % | 99,7 | 85,4 |
| Fogging (DIN 75201 (2011)) Gravimetrisch | mg | 0,11 | 0,86 |
| * Es wurden folgende Emissionen gefunden: Acetat, Di-t.-butyl- cyclohexadiendion, Sulfatester, i-Alkengemisch, i-Alken, Stearylalkohol, Dibutylphthalat, Fettsäureester, Fettalkohole, DOP. ** Es wurden folgende Emissionen gefunden: Perfluorierter Alkohol, Butanonoxim, Phosphonsäureester, Phosphonat, Alkohole, Nonansäure, DOA, Camphen, Caren oder Pinen, Ethylstearat, Fettalkohole, Fettsäuren, DOP, Alkengemisch, Diisononylphthalat, TMDD, KW-Gemisch etc. | | | |

Es zeigt sich, dass der erfindungsgemäße Vliesstoff mit einer geringen Dicke und dennoch zufriedenstellenden mechanischen Eigenschaften, insbesondere einer hohen Dehnung, gefertigt werden kann, wodurch er zur Verwendung im Fahrzeuginnenraum auch bei geringem Stauraum geeignet ist. Dies war überraschend, da insbesondere bei geprägten Vliesstoffen eine geringe Dicke in der Regel mit einer geringen Dehnung einhergeht was zu einem papierartigen Charakter führt. Darüber hinaus kann der erfindungsgemäße Vliesstoff mit oder ohne textilen Charakter gefertigt werden. Außerdem zeigt der Vliesstoff eine besonders gleichmäßige Faserverteilung mit einer guten Faserverbindung und hierdurch guten mechanischen Eigenschaften.

Schließlich zeigt der erfindungsgemäße Vliesstoff einen sehr hohen Schallabsorptionsgrad, gemessen bei 2500Hz, der deutlich höher als der von PVC ist.

**Beispiel 3: Herstellung des erfindungsgemäßen Vliesstoffs 2**

Verwendete Materialien zur Herstellung des Vliesstoffs 2

- Polyethylenterephthalat-Gerüststapelfasern:

    80 Gew.% Monokomponenten- PET Stapelfasern
    Stapellänge: 38 mm
    Feinheit: 1,7 dTex

- Polyethylenterephthalat-Bindestapelfasern:

20 Gew.% Bikomponenten- PET/ Polyethylenterephthalat-
Bindestapelfasern (CoPET Stapelfasern)
niedrigschmelzendes CoPET mit einem Schmelzpunkt von 180 °C
Stapellänge: 51 mm
Feinheit: 4,4 dTex.

Die Polyethylenterephthalat-Gerüststapelfasern und die Polyethylenterephthalat-Bindestapelfasern werden im Verhältnis 80%:20% gemischt und anschließend gekrempelt, kreuzgelegt,vernadelt und mit einem Prägekalander mit einem lederähnlichen Muster versehen und gleichzeitig auf eine auf eine Dicke vom 0,7 mm kalibriert.

**Beispiel 4: Herstellung zweier Vergleichsvliesstoffe mit Monokomponenten-Stapelfasern**

Verwendete Materialien zur Herstellung der Vergleichsvliesstoffe 3 und 4

- Polyethylenterephthalat-Gerüststapelfasern:

80 Gew.% Monokomponenten- PET Stapelfasern
Stapellänge: 38 mm
Feinheit: 1,7 dTex

Monokomponenten-Stapelfasern:

20 Gew.% (für Vergleichsvliesstoff 3)
10 Gew.% (für Vergleichsvliesstoff 4)
niedrigschmelzendes CoPET mit einem Schmelzpunkt von 170 °C
Stapellänge: 60 mm
Feinheit: 5,5 dTex.

Die Polyethylenterephthalat-Gerüststapelfasern und die Monokomponenten-Stapelfasern werden im Verhältnis 80%:20% (für Vergleichsvliesstoff 3) und im Verhältnis 90%:10% (für Vergleichsvliesstoff 4) gemischt und anschließend gekrempelt, kreuzgelegt,vernadelt und mit einem Prägekalander mit einem lederähnlichen Muster versehen und gleichzeitig auf eine auf eine Dicke vom 0,7mm kalibriert.

**Beispiel 5: Evaluierung verschiedener mechanischer Eigenschaften des Vliesstoffs 2 und Vergleich mit den Vergleichsvliesstoffen 3 und 4**

Tab.2

| Eigenschaften | Einheit | Vliesstoff 2 (erfindungsgemä ß) | Vergleichs-vliesstoff 3 | Vergleichs-vliesstoff 4 |
|---|---|---|---|---|
| Gewicht (DIN EN 29073-1: 1992-08) | g/m$^2$ | 195,4 | 195,8 | 195,2 |
| Dicke (DIN 9073-2 / 1997) | mm | 0,66 | 0,72 | 0,69 |
| Variationskoeffizient (Dicke) | % | 8,58 | 22,82 | 16,15 |
| Zugfestigkeit (EN 29073-03 (1992) längs | N | 264,06 | 248,50 | 220,48 |
| Variationskoeffizient (Zugfestigkeit - längs) | % | 7,40 | 25,61 | 14,13 |
| Zugfestigkeit (EN 29073-03 (1992) quer | N | 485,14 | 429,04 | 430,17 |

(fortgesetzt)

| Eigenschaften | Einheit | Vliesstoff 2 (erfindungsgemäß) | Vergleichs- vliesstoff 3 | Vergleichs- vliesstoff 4 |
|---|---|---|---|---|
| Variationskoeffizient (Zugfestigkeit - quer) | % | 1,75 | 4,39 | 5,39 |
| Dehnung (EN 29073-03 (1992) längs | % | 17,80 | 20,72 | 87,86 |
| Dehnung (EN 29073-03 (1992) quer | % | 44,65 | 55,14 | 69,58 |
| Weiterreißkraft DIN 51220 (2003) längs | N | 51,82 | 44,35 | 47,91 |
| Variationskoeffizient (Weiterreißkraft - Längs) | % | 2,2 | 10,59 | 8,39 |
| Weiterreißkraft DIN 51220 (2003) quer | N | 30,52 | 26,25 | 24,02 |
| Variationskoeffizient (Weiterreißkraft - quer) | % | 3,28 | 11,74 | 7,30 |
| Haarigkeitsindex in | - | 0,26 | 1,83 | 2,92 |
| Variationskoeffizient (Haarigkeitsindex $i_H$) | - | 0,13 | 0,27 | 0,78 |

Es zeigt sich, dass der erfindungsgemäße Vliesstoff 2 insgesamt besssere mechanische Eigenschaften in Bezug auf Zugfestigkeit, Dehnung und Weiterreißkraft als die Vergleichsvliesstoffe 3 und 4 hat. Darüber hinaus sind die Variationskoeffizienten für Zugfestigkeit, Weiterreißkraft und Dicke geringer. Es wird vermutet, dass der geringere Variationskoeffizient der Dicke des erfindungsgemäßen Vliesstoffs gegenüber den Vergleichsvliesstoffen 3 und 4 darauf zurückzuführen ist, dass die Monokomponenten-Stapelfasern ungleichmäßiger im Vliesstoff verteilt sind und eine höhere Tendenz aufweisen, sich an der Oberfläche des Vliesstoffs zu konzentrieren. Dies führt zu einer partiell stärkeren Haftung am Kalander, was wiederum zu einer unregelmäßigeren Dicke führt. Dagegen ermöglichen die Kern/Mantel-Stapelfasern eine sehr homogene Verteilung. Dabei kann insbesondere eine "Verklumpung" der Bindekomponente, wie sie bei der Verwendung von Monokomponenten-Bindefasern, speziell bei höheren Mengen, oftmals auftritt, vermieden und eine hohe Gleichmäßigkeit der Dicke erzielt werden. Schließlich zeigt der erfindungsgemäße Vliesstoff eine deutlich geringere Haarigkeit.

**Patentansprüche**

1. Geprägter Vliesstoff für den Fahrzeuginnenraum, insbesondere für eine Kofferraumabdeckung, umfassend Polyethylenterephthalat-Gerüststapelfasern und Polyethylenterephthalat-Bindestapelfasern, wobei der Anteil an Polyethylenterephthalat-Bindestapelfasern 5 bis 50 Gew.%, bezogen auf das Gesamtgewicht des Vliesstoffs beträgt, und wobei die Polyethylenterephthalat-Bindestapelfasern als Kern/Mantel-Stapelfasern ausgebildet sind, **dadurch gekennzeichnet, dass** der Mantel der Kern/Mantel-Stapelfasern niedrigschmelzendes Co-Polyethylenterephthalat mit einem Schmelzpunkt gemessen nach DIN ISO 11357-3 (2013) in einem Bereich von 80°C bis 230°C aufweist.

2. Geprägter Vliesstoff nach Anspruch 1, **dadurch gekennzeichnet, dass** der Vliesstoff einen Schallabsorptionsgrad, gemessen nach DIN ISO 10534-1 (2001) bei einem Wandabstand von 30 mm und bei einer Frequenz von 800 Hz bis 4000 Hz, bevorzugt von 800 bis 2000 Hz, insbesondere bei 2500 Hz von mehr als 45 %, beispielsweise von 45 % bis 100 %, noch bevorzugter von mehr als 60 %, beispielsweise von 60 % bis 100 %, noch bevorzugter von mehr als 70 %, beispielsweise von 70 % bis 100 %, und insbesondere von mehr als 80 %, beispielsweise von 80 % bis 100 % aufweist.

3. Geprägter Vliesstoff nach Anspruch 1 oder 2, **gekennzeichnet durch** eine Dicke, gemessen nach DIN 9073-2 (1997), Prüfeinrichtung 1, von 0,3 bis 1,2 mm, bevorzugt von 0,4 bis 1 mm, noch bevorzugter von 0,4 bis 0,8 mm, noch bevorzugter von 0,4 bis 0,7 mm, noch bevorzugter von 0,45 bis 0,7 mm und insbesondere von 0,45 bis 0,6 mm.

4. Geprägter Vliesstoff nach einem oder mehreren der vorangehenden Ansprüche, **dadurch gekennzeichnet, dass** das Mengenverhältnis zwischen Kern und Mantel in den Kern/Mantel-Stapelfasern im Bereich von 90:10 bis 10:90 liegt.

5. Geprägter Vliesstoff nach einem oder mehreren der vorangehenden Ansprüche, **dadurch gekennzeichnet, dass** die Polyethylenterephthalat-Gerüststapelfasern und die Polyethylenterephthalat-Bindestapelfasern unabhängig voneinander einen Titer im Bereich von 1 bis 10 dtex, bevorzugt von 2 bis 8 dtex und insbesondere von 2 bis 7 dtx aufweisen.

6. Geprägter Vliesstoff nach einem oder mehreren der vorangehenden Ansprüche, **dadurch gekennzeichnet, dass** die Polyethylenterephthalat-Gerüststapelfasern und die Polyethylenterephthalat-Bindestapelfasern unabhängig voneinander eine Stapellänge im Bereich von 1 bis 100 mm, bevorzugt 10 bis 70 mm, noch bevorzugter 20 bis 60 mm und insbesondere von 30 bis 50 mm aufweisen.

7. Geprägter Vliesstoff nach einem oder mehreren der vorangehenden Ansprüche, **dadurch gekennzeichnet, dass** der Vliesstoff ein vernadelter und/oder durch Wasserstrahlen verfestigter Vliesstoff ist, wobei die Nadeldichte im vernadelten Vliesstoff vorzugsweise von 25 Nadeln/cm$^2$ bis 700 Nadeln/cm$^2$ beträgt.

8. Geprägter Vliesstoff nach einem oder mehreren der vorangehenden Ansprüche, **gekennzeichnet durch** eine Zugfestigkeit längs, gemessen nach EN 29073-03 (1992) (Abzugsgeschwindigkeit: 200 mm/min., Vorkraft: 0,5N, Probenbreite 50 mm) von mehr als 50 N, beispielsweise 50 N bis 700 N, noch bevorzugter von mehr als 200 N, beispielsweise von 200 N bis 500 N und insbesondere von mehr als 300 N, beispielsweise von 300 N bis 450 N und / oder durch eine Zugfestigkeit quer, gemessen nach EN 29073-03 (1992) (Abzugsgeschwindigkeit : 200 mm/min., Vorkraft : 0,5N, Probenbreite 50 mm) von mehr als 50 N, beispielsweise von 50 N bis 600 N, noch bevorzugter von mehr als 200 N, beispielsweise von 200 N bis 500 N und insbesondere von mehr als 250 N, beispielsweise von 250 N bis 400 N.

9. Geprägter Vliesstoff nach einem oder mehreren der vorangehenden Ansprüche, **gekennzeichnet durch** eine Weiterreißkraft gemessen nach EN 29073-03 (1992) längs und/oder quer unabhängig voneinander, (Abzugsgeschwindigkeit: 200 mm/min, Probenbreite: 50mm) von mehr als 5 N, beispielsweise von 5 N bis 100 N, noch bevorzugter von mehr als 10 N, beispielsweise von 10 N bis 75 N und insbesondere von mehr als 20 N, beispielsweise von 20 N bis 60 N.

10. Geprägter Vliesstoff nach einem oder mehreren der vorangehenden Ansprüche, **gekennzeichnet durch** ein Flächengewicht nach ISO 9073-1 (1989) von 50 g/m$^2$ bis 1000 g/m$^2$.

11. Geprägter Vliesstoff nach einem oder mehreren der vorangehenden Ansprüche, **gekennzeichnet durch** eine Dehnung längs und/oder quer unabhängig voneinander, gemessen nach EN 29073-03 (1992) (Abzugsgeschwindigkeit: 200 mm/min., Vorkraft : 0,5N, Probenbreite 50 mm) von 5 bis 50%, noch bevorzugter von 10 bis 40% und insbesondere von 10 bis 30%.

12. Geprägter Vliesstoff nach einem oder mehreren der vorangehenden Ansprüche, **dadurch gekennzeichnet, dass** der Vliesstoff einen Anteil an Polyethylenterephthalat-Bindestapelfasern von 10 bis 40 Gew.% aufweist.

13. Geprägter Vliesstoff nach einem oder mehreren der vorangehenden Ansprüche, **dadurch gekennzeichnet, dass** der Vliesstoff eine Beschichtung aufweist, wobei die Beschichtung einen Binder, vorzugsweise Acrylat, Farbpigmente, Verdicker und/oder Flammschutzmittel enthält.

14. Geprägter Vliesstoff nach einem oder mehreren der vorangehenden Ansprüche, **dadurch gekennzeichnet, dass** der Vliesstoff, ein- oder beidseitig, ein Prägemuster aufweist.

15. Geprägter Vliesstoff nach einem oder mehreren der vorangehenden Ansprüche, **dadurch gekennzeichnet, dass** der Vliesstoff zumindest auf einer Seite einen Haarigkeitsindex, wie in der Beschreibung definiert, von unter 1,50, beispielsweise von 0,05 bis 1,50, noch bevorzugter von 0,05 bis 1,40 und insbesondere von 0,10 bis 1,30 aufweist.

16. Verwendung eines geprägten Vliesstoffs nach einem oder mehreren der vorangehenden Ansprüche als Kofferraumabdeckung für den Fahrzeuginnenraum.

17. Kofferraumabdeckung für ein Fahrzeug, die einen Vliesstoff nach einem oder mehreren der vorangehenden Ansprüche aufweist.

**Claims**

1. Embossed nonwoven fabric for vehicle interiors, in particular for a boot cover, comprising polyethylene terephthalate scaffold staple fibres and polyethylene terephthalate binder staple fibres, wherein the proportion of polyethylene terephthalate binder staple fibres is 5% to 50% by weight based on the total weight of the nonwoven fabric and wherein the polyethylene terephthalate binder staple fibres are in the form of core/shell staple fibres, **characterized in that** the shell of the core/shell staple fibres comprises low-melting co-polyethylene terephthalate having a melting point measured according to DIN ISO 11357-3 (2013) in a range from 80°C to 230°C.

2. Embossed nonwoven fabric according to Claim 1, **characterized in that** the nonwoven fabric has a sound absorption coefficient measured according to DIN ISO 10534-1 (2001) at a wall distance of 30 mm and at a frequency of 800 Hz to 4000 Hz, preferably of 800 to 2000 Hz, in particular at 2500 Hz, of more than 45%, for example of 45% to 100%, more preferably of more than 60%, for example of 60% to 100%, more preferably of more than 70%, for example of 70% to 100%, and in particular of more than 80%, for example of 80% to 100%.

3. Embossed nonwoven fabric according to Claim 1 or 2, **characterized by** a thickness, measured according to DIN 9073-2 (1997), test setup 1, of 0.3 to 1.2 mm, preferably of 0.4 to 1 mm, more preferably of 0.4 to 0.8 mm, more preferably of 0.4 to 0.7 mm, more preferably of 0.45 to 0.7 mm and in particular of 0.45 to 0.6 mm.

4. Embossed nonwoven fabric according to one or more of the preceding claims, **characterized in that** the proportion of core to shell in the core/shell staple fibres is in the range from 90:10 to 10:90.

5. Embossed nonwoven fabric according to one or more of the preceding claims, **characterized in that** the polyethylene terephthalate scaffold staple fibres and the polyethylene terephthalate binder staple fibres independently of one another have a linear density in the range from 1 to 10 dtex, preferably from 2 to 8 dtex and in particular from 2 to 7 dtex.

6. Embossed nonwoven fabric according to one or more of the preceding claims, **characterized in that** the polyethylene terephthalate scaffold staple fibres and the polyethylene terephthalate binder staple fibres independently of one another have a staple length in the range from 1 to 100 mm, preferably 10 to 70 mm, more preferably 20 to 60 mm and in particular from 30 to 50 mm.

7. Embossed nonwoven fabric according to one or more of the preceding claims, **characterized in that** the nonwoven fabric is a nonwoven fabric that is needled and/or consolidated with water jets, wherein the needle density in the needled nonwoven fabric is preferably from 25 needles/cm$^2$ to 700 needles/cm$^2$.

8. Embossed nonwoven fabric according to one or more of the preceding claims, **characterized by** a longitudinal tensile strength measured according to EN 29073-03 (1992) (takeoff speed: 200 mm/min, initial force: 0.5 N, specimen width: 50 mm) of more than 50 N, for example 50 N to 700 N, more preferably of more than 200 N, for example of 200 N to 500 N and in particular of more than 300 N, for example of 300 N to 450 N, and/or by a transverse tensile strength measured according to EN 29073-03 (1992) (takeoff speed: 200 mm/min, initial force: 0.5 N, specimen width: 50 mm) of more than 50 N, for example of 50 N to 600 N, more preferably of more than 200 N, for example of 200 N to 500 N and in particular of more than 250 N, for example of 250 N to 400 N.

9. Embossed nonwoven fabric according to one or more of the preceding claims, **characterized by** a tear propagation strength, measured according to EN 29073-03 (1992) independently of one another in the longitudinal and/or transverse direction (takeoff speed: 200 mm/min, specimen width: 50 mm), of more than 5 N, for example of 5 N to 100 N, more preferably of more than 10 N, for example of 10 N to 75 N and in particular of more than 20 N, for example of 20 N to 60 N.

10. Embossed nonwoven fabric according to one or more of the preceding claims, **characterized by** a basis weight according to ISO 9073-1 (1989) of 50 g/m$^2$ to 1000 g/m$^2$.

11. Embossed nonwoven fabric according to one or more of the preceding claims, **characterized by** an elongation independently of one another in the longitudinal and/or transverse direction, measured according to EN 29073-03 (1992) (takeoff speed: 200 mm/min, initial force: 0.5 N, specimen width: 50 mm), of 5% to 50%, more preferably of 10% to 40% and in particular of 10% to 30%.

12. Embossed nonwoven fabric according to one or more of the preceding claims, **characterized in that** the nonwoven fabric comprises a proportion of polyethylene terephthalate binder staple fibres of 10% to 40% by weight.

13. Embossed nonwoven fabric according to one or more of the preceding claims, **characterized in that** the nonwoven fabric has a coating, wherein the coating comprises a binder, preferably acrylate, colour pigments, thickeners and/or flame retardants.

14. Embossed nonwoven fabric according to one or more of the preceding claims, **characterized in that** the nonwoven fabric has an embossed pattern on one or both sides.

15. Embossed nonwoven fabric according to one or more of the preceding claims, **characterized in that** at least on one side the nonwoven fabric has a hairiness index, as defined in the description, of below 1.50, for example of 0.05 to 1.50, more preferably of 0.05 to 1.40 and in particular of 0.10 to 1.30.

16. Use of an embossed nonwoven fabric according to one or more of the preceding claims as a boot cover for vehicle interiors.

17. Boot cover for a vehicle, comprising a nonwoven fabric according to one or more of the preceding claims.

**Revendications**

1. Non-tissé gaufré pour l'habitacle d'un véhicule, en particulier pour un couvercle de coffre, comprenant des fibres coupées de structure de poly(téréphtalate d'éthylène) et des fibres coupées de liaison de poly(téréphtalate d'éthylène), la proportion des fibres coupées de liaison de poly(téréphtalate d'éthylène) étant de 5 à 50 % en poids par rapport au poids total du non-tissé, et les fibres coupées de liaison de poly(téréphtalate d'éthylène) étant conçues comme des fibres coupées cœur/gaine, **caractérisé en ce que** la gaine des fibres coupées cœur/gaine comprend un copoly(téréphtalate d'éthylène) à bas point de fusion ayant un point de fusion mesuré selon DIN ISO 11357-3 (2013) dans la plage de 80 °C à 230 °C.

2. Non-tissé gaufré selon la revendication 1, **caractérisé en ce que** le non-tissé présente un facteur d'absorption acoustique, mesuré selon DIN ISO 10534-1 (2001), pour une distance entre parois de 30 mm et une fréquence de 800 Hz à 4 000 Hz, de préférence de 800 à 2 000 Hz, en particulier de 2 500 Hz, supérieur à 45 %, par exemple de 45 % à 100 %, encore plus préférentiellement supérieur à 60 %, par exemple de 60 % à 100 %, encore plus préférentiellement supérieur à 70 %, par exemple de 70 % à 100 %, et en particulier supérieur à 80 %, par exemple de 80 % à 100 %.

3. Non-tissé gaufré selon la revendication 1 ou 2, **caractérisé par** une épaisseur, mesurée selon DIN 9073-2 (1997), dispositif d'essai 1, de 0,3 à 1,2 mm, de préférence de 0,4 à 1 mm, encore plus préférentiellement de 0,4 à 0,8 mm, encore plus préférentiellement de 0,4 à 0,7 mm, encore plus préférentiellement de 0,45 à 0,7 mm et en particulier de 0,45 à 0,6 mm.

4. Non-tissé gaufré selon l'une ou plusieurs des revendications précédentes, **caractérisé en ce que** le rapport pondéral du coeur à la gaine dans les fibres coupées cœur/gaine est compris dans la plage de 90:10 à 10:90.

5. Non-tissé gaufré selon l'une ou plusieurs des revendications précédentes, **caractérisé en ce que** les fibres coupées de structure de poly(téréphtalate d'éthylène) et les fibres coupées de liaison de poly(téréphtalate d'éthylène) présentent indépendamment les unes des autres un titre dans la plage de 1 à 10 dtex, de préférence de 2 à 8 dtex et en particulier de 2 à 7 dtex.

6. Non-tissé gaufré selon l'une ou plusieurs des revendications précédentes, **caractérisé en ce que** les fibres coupées de structure de poly(téréphtalate d'éthylène) et les fibres coupées de liaison de poly(téréphtalate d'éthylène) présentent indépendamment les unes des autres une longueur de fibre coupée dans la plage de 1 à 100 mm, de préférence de 10 à 70 mm, encore plus préférentiellement de 20 à 60 mm et en particulier de 30 à 50 mm.

7. Non-tissé gaufré selon l'une ou plusieurs des revendications précédentes, **caractérisé en ce que** le non-tissé est un non-tissé aiguilleté et/ou solidifié par des jets d'eau, la densité des aiguilles du non-tissé aiguilleté étant de préférence de 25 aiguilles/cm$^2$ à 700 aiguilles/cm$^2$.

8. Non-tissé gaufré selon l'une ou plusieurs des revendications précédentes, **caractérisé par** une résistance à la traction longitudinale, mesurée selon EN 29073-03 (1992) (vitesse de traction : 200 mm/min, pré-force : 0,5 N, largeur de l'éprouvette 50 mm) supérieure à 50 N, par exemple de 50 N à 700 N, encore plus préférentiellement supérieure à 200 N, par exemple de 200 N à 500 N et en particulier supérieure à 300 N, par exemple de 300 N à 450 N et/ou par une résistance à la traction transversale, mesurée selon EN 29073-03 (1992) (vitesse de traction : 200 mm/min, pré-force : 0,5 N, largeur de l'éprouvette 50 mm) supérieure à 50 N, par exemple de 50 N à 600 N, encore plus préférentiellement supérieure à 200 N, par exemple de 200 N à 500 N et en particulier supérieure à 250 N, par exemple de 250 N à 400 N.

9. Non-tissé gaufré selon l'une ou plusieurs des revendications précédentes, **caractérisé par** une résistance à la déchirure amorcée, mesurée selon EN 29073-03 (1992) dans le sens longitudinal et/ou transversal, indépendamment l'une de l'autre (vitesse de traction : 200 mm/min, largeur de l'éprouvette : 50 mm), supérieure à 5 N, par exemple de 5 N à 100 N, encore plus préférentiellement supérieure à 10 N, par exemple de 10 N à 75 N et en particulier supérieure à 20 N, par exemple de 20 N à 60 N.

10. Non-tissé gaufré selon l'une ou plusieurs des revendications précédentes, **caractérisé par** une masse surfacique selon ISO 9073-1 (1989) de 50 g/m$^2$ à 1 000 g/m$^2$.

11. Non-tissé gaufré selon l'une ou plusieurs des revendications précédentes, **caractérisé par** un allongement longitudinal et/ou transversal, indépendamment l'un de l'autre, mesuré selon EN 29073-03 (1992) (vitesse de traction : 200 mm/min, pré-force : 0,5 N, largeur de l'éprouvette 50 mm) de 5 à 50 %, encore plus préférentiellement de 10 à 40 % et en particulier de 10 à 30 %.

12. Non-tissé gaufré selon l'une ou plusieurs des revendications précédentes, **caractérisé en ce que** le non-tissé présente une proportion de fibres coupées de liaison de poly(téréphtalate d'éthylène) de 10 à 40 % en poids.

13. Non-tissé gaufré selon l'une ou plusieurs des revendications précédentes, **caractérisé en ce que** le non-tissé présente un revêtement, le revêtement contenant un liant, de préférence un acrylate, des pigments colorés, des épaississants et/ou des agents d'ignifugation.

14. Non-tissé gaufré selon l'une ou plusieurs des revendications précédentes, **caractérisé en ce que** le non-tissé présente un modèle de gaufrage sur une ou deux faces.

15. Non-tissé gaufré selon l'une ou plusieurs des revendications précédentes, **caractérisé en ce que** le non-tissé présente au moins sur une face un indice de pilosité, tel que défini dans la description, inférieur à 1,50, par exemple de 0,05 à 1,50, encore plus préférentiellement de 0,05 à 1,40 et en particulier de 0,10 à 1,30.

16. Utilisation d'un non-tissé gaufré selon l'une ou plusieurs des revendications précédentes en tant que couvercle de coffre pour l'habitacle d'un véhicule.

17. Couvercle de coffre pour un véhicule, qui comprend un non-tissé selon l'une ou plusieurs des revendications précédentes.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1321554 A1
- EP 3769954 A1
- DE 202015005969 U1
- DE 102018105164 A1